# EUROPÄISCHE PATENTSCHRIFT

(11) **EP 4 146 747 B1**
(45) Veröffentlichungstag und Bekanntmachung des Hinweises auf die Patenterteilung: **18.10.2023**
(21) Anmeldenummer: 20725121.6
(22) Anmeldetag: 05.05.2020
(51) Int. Cl.: C09D 5/03

(54) **PULVERFARBEN-ZUSAMMENSETZUNG**
POWDER PAINT COMPOSITION
COMPOSITION DE PEINTURE EN POUDRE

(43) Veröffentlichungstag der Anmeldung: 15.03.2023
(73) Patentinhaber: Wacker Chemie AG, 81737 München (DE)
(72) Erfinder: BEMERT, Lada, 84543 Winhöring (DE); BAUEREGGER, Stefan, 84508 Burgkirchen (DE); DIETRICH, Ulf, 84489 Burghausen (DE); WEITZEL, Hans-Peter, 84571 Reischach (DE)
(74) Vertreter: Ege, Markus
(86) Internationale Anmeldenummer: PCT/EP2020/062413
(87) Internationale Veröffentlichungsnummer: WO 2021/223850

(56) Entgegenhaltungen:
- EP-A1- 1 593 721
- EP-A1- 1 792 922
- DE-A1-102004 059 377
- DE-A1-102014 225 773

## Beschreibung

Die Erfindung betrifft eine Pulverfarben-Zusammensetzung, Verfahren zu deren Herstellung und die Verwendung der Pulverfarben-Zusammensetzung zur Herstellung von Dispersionsfarben.

Kunstharzdispersionsfarben oder umgangssprachlich Dispersionsfarben gehören wegen ihrer einfachen Verarbeitbarkeit, den universellen Gestaltungsmöglichkeiten (Farbgebung, Effekte) und aus Gründen des Umweltschutzes (Vermeidung von Lösemittelemissionen) zu der am meisten verwendeten Produktgruppe der Lacke und Farben. Die Hauptanwendung von Dispersionsfarben ist die als Wandfarbe im Innenbereich und im Außenbereich.

Dispersionsfarben sind bei geschlossenem Behälter lange haltbar. Doch ist der Behälter erst einmal geöffnet, gelangen schnell Keime in die Dispersionsfarbe, was zu deren biologischem Abbau und zur Schimmelbildung führen kann. Zum Schutz vor bakteriellem Befall werden bei Dispersionsfarben daher Konservierungsmittel wie Isothiazolinone eingesetzt, welche insbesondere bei Allergikern Reizungen und Hautirritationen hervorrufen können. Alternativ dazu wird in der Dispersionsfarbe ein sehr stark alkalischer pH-Wert von bis zu pH = 13 eingestellt. Solche stark alkalisierten Dispersionsfarben können ebenfalls zu Reizungen und Schädigung der Haut führen. Es sind deshalb aufwändige Vorkehrungen zum Arbeitsschutz erforderlich.

Mit der Verwendung einer trockenen Pulverfarbe, deren Zusammensetzung bis auf den Wasseranteil der Zusammensetzung der Dispersionsfarbe entspricht, könnten die obengenannten Nachteile überwunden werden. Bei einer wasserfreien Pulverfarbe ist kein Schutz vor Verkeimung während der Lagerung erforderlich. Deshalb können Lagerung und Transport einer trockenen Pulverfarbe in einem wesentlich breiteren Temperaturintervall und über einen wesentlich längeren Zeitraum als bei wässrigen Dispersionsfarben-Formulierungen erfolgen. Ein weiterer Vorteil beim Transport einer Pulverfarben-Zusammensetzung ist der, dass sich das Gewicht der Farbe um den Wasseranteil reduziert. Von Vorteil ist auch, dass mit einer Pulverfarben-Zusammensetzung bei deren Verarbeitung die erforderliche Menge an wässriger Dispersionsfarbe hergestellt werden kann, und der Rest der Pulverfarbe weiterhin aufbewahrt werden kann. Das Volumen von zu entsorgenden Farbresten wird damit effektiv reduziert.

In der DE 4300319 C1 wird ein wasserlösliches Farbpulver beschrieben mit dem unter Zugabe von Wasser eine Dispersionsfarbe hergestellt werden kann. Als Bindemittel wird ein Copolymer aus Vinylacetat und Ethylen vorgeschlagen. In der DE 19751553 A1 werden wässrige Dispersionen und in Wasser redispergierbare Polymerpulver, welche ein vernetzbares Polymerisat mit mehrfach ethylenisch ungesättigten Monomereinheiten enthalten, als Bindemittel für Dispersionsfarben und Pulverfarben und Putze beschrieben. In der EP 671435 B1 werden pulverförmige, redispergierbare Bindemittel für Anstrichfarben beschrieben, welche mittels Sprühtrocknung einer Acrylatdispersion in Gegenwart eines Copolymerisats aus wasserunlöslichen Comonomeren und wasserlöslichen, salzbildenden Comonomeren erhalten werden. In der EP 1449892 B1 wird eine pulverförmige Beschichtungszusammensetzung beschrieben, die ein redispergierbares, granuliertes Harzpulver und zumindest ein granuliertes Farbmaterial enthält. Das Harzpulver wird erhalten, indem eine Emulsion eines Vinylacetatharzes, Ethylenvinylacetatharzes oder (Acryl)styrolharz zur Bildung eines Pulvers einem Sprühtrocknungsverfahren unterzogen wird. Die WO 2012/007057 beschreibt redispergierbare, zementfreie Mörtel und Putze mit Dispersionspulver auf Basis von Acrylat- oder Styrol-Acrylat-Polymerisaten und mit Koaleszenzmittel, Füllstoff und Sand, sowie gegebenenfalls weiteren Additiven wie Biozid. Aus der US 8580866 ist eine Trockenputz-Zusammensetzung mit einem redispergierbaren Acrylatpolymerpulver mit CaCOs-Füllstoff, Koaleszenzmittel und Alkalihydroxid zur pH-Einstellung bekannt. Die EP 2660294 B1 beschreibt eine anorganische Trockenpulver-Baufarbe, welche ein Silikat, einen Silikat-Härter und ein redispergierbares Polymerpulver enthält. Die EP 2909255 beschreibt ein Dispersionspulver auf Basis von Acrylatpolymerisaten, welche in einem Mehrstufen-Polymerisationsverfahren erhalten werden und als Bindemittel für Beschichtungsmittel eingesetzt werden können. Dabei wird in einer ersten Stufe in Gegenwart von Emulgator ein alkalilösliches Polymer hergestellt und in dessen Anwesenheit in einer oder mehreren weiteren Stufen in Gegenwart von Emulgator ein Acrylatpolymerisat hergestellt. Die damit erhaltene Dispersion wird mit Base versetzt und anschließend sprühgetrocknet. Die EP 3157992 beschreibt die Verwendung von emulgatorstabilisierten Styrol-Acrylat-Polymerisaten, welche mit silanfunktionellen und carboxylfunktionellen Monomeren funktionalisiert sind, als Bindemittel in Anstrichfarben.

Es bestand die Aufgabe eine Pulverfarben-Zusammensetzung zur Verfügung zu stellen, bei deren Verwendung zur Herstellung von Dispersionsfarben, Beschichtungsmittel erhalten werden, mit denen Anstriche mit hoher Nassabriebsfestigkeit und hoher Deckkraft erhalten werden.

Gegenstand der Erfindung ist eine Pulverfarben-Zusammensetzung enthaltend a) mindestens ein in Wasser redispergierbares Polymerpulver, b) Pigment und Füllstoff, und c) gegebenenfalls weitere Zusatzstoffe, dadurch gekennzeichnet, dass das in Wasser redispergierbare Polymerpulver a) ein mit Polyvinylalkohol stabilisiertes Polymerisat ist, auf der Basis von a1) 20 bis 100 Gew.-% von wenigstens einem Monomer aus der Gruppe bestehend aus Acrylsäureester von verzweigten oder unverzweigten Alkoholen mit 1 bis 12 C-Atomen, a2) 0 bis 60 Gew.-% von wenigstens einem Monomer aus der Gruppe bestehend aus Methacrylsäureester von verzweigten oder unverzweigten Alkoholen mit 1 bis 12 C-Atomen und Styrol, a3) 0 bis 40 Gew.-% von wenigstens einem Monomer aus der Gruppe bestehend aus Vinylester von verzweigten oder unverzweigten Carbonsäuren mit 2 bis 12 C-Atomen, a4) 0 bis 20 Gew.-% weiterer damit copolymerisierbarer ethylenisch ungesättigter Comonomere, jeweils bezogen auf das Gesamtgewicht der Comonomere und wobei sich die Angaben in Gew.-% jeweils auf 100 Gew.-% aufaddieren, und als Polyvinylalkohol ein Gemisch aus mindestens einem Polyvinylalkohol mit einem Hydrolysegrad von 80 bis 95 Mol-% und einer Viskosität nach Höppler (4 %-ige wässrige Lösung, Methode nach Höppler bei 20°C, DIN 53015) von 1 bis 5 mPas und mindestens einem Polyvinylalkohol mit einem Hydrolysegrad von 80 bis 95 Mol-% und einer Viskosität nach Höppler von 6 bis 40 mPas enthalten ist.

In Wasser redispergierbare Polymerpulver-Zusammensetzungen (Dispersionspulver) werden im Allgemeinen durch Trocknung der entsprechenden wässrigen Dispersionen eines Basispolymerisats hergestellt. Die Herstellung der wässrigen Dispersion des Basispolymerisats erfolgt vorzugsweise mittels radikalisch initiierter Emulsionspolymerisation von einem oder mehreren ethylenisch ungesättigten Monomeren. Die damit erhaltene wässrige Dispersion des Basispolymerisats wird anschließend, vorzugsweise in Gegenwart von einer Trocknungshilfe (im Allgemeinen ein Schutzkolloid), beispielsweise mittels Sprühtrocknung, getrocknet. Gegebenenfalls können während oder nach der Trocknung noch Antiblockmittel oder weitere Additive zugegeben werden. Aufgrund des Schutzkolloidanteils wird zum einen beim Trocknungsvorgang verhindert, dass die Polymerteilchen irreversibel verkleben, da die Polymerteilchen von den Schutzkolloid-Teilchen umhüllt werden. Zum anderen bewirkt diese Schutzkolloid-Matrix, welche sich beim Dispergieren der Polymerpulverzusammensetzung in Wasser wieder auflöst, dass die Polymerpartikel wieder mit der Partikelgröße der Ausgangsdispersion in der wässrigen (Re)dispersion vorliegen (TIZ-Fachberichte, 1985, Vol. 109 (9), 698).

Das in Wasser redispergierbare Polymerpulver (Dispersionspulver) a) wird mittels radikalisch initierter wässriger Emulsionspolymerisation der Comonomere a1), und gegebenenfalls a2), a3) und a4) und anschließender Trocknung der damit erhaltenen wässrigen Dispersion des Mischpolymerisats erhalten.

Im Allgemeinen werden a1) 20 bis 100 Gew.-% von wenigstens einem Monomer aus der Gruppe bestehend aus Acrylsäureester von verzweigten oder unverzweigten Alkoholen mit 1 bis 12 C-Atomen copolymerisiert, vorzugsweise 30 bis 70 Gew.-%, jeweils bezogen auf das Gesamtgewicht der Comonomere. Bevorzugte Acrylsäureester sind Methylacrylat, Ethylacrylat, Propylacrylat, n-Butylacrylat, t-Butylacrylat, 2-Ethylhexylacrylat. Besonders bevorzugt sind Methylacrylat, n-Butylacrylat und 2-Ethylhexylacrylat.

Im Allgemeinen werden a2) 0 bis 60 Gew.-% von wenigstens einem Monomer aus der Gruppe bestehend aus Methacrylsäureester von verzweigten oder unverzweigten Alkoholen mit 1 bis 12 C-Atomen und Styrol copolymerisiert, vorzugsweise 30 bis 60 Gew.-%, jeweils bezogen auf das Gesamtgewicht der Comonomere. Bevorzugte Methacrylsäureester sind Methylmethacrylat, Ethylmethacrylat, Propylmethacrylat, n-Butylmethacrylat. Besonders bevorzugt sind Methylmethacrylat und Styrol.

Im Allgemeinen werden a3) 0 bis 60 Gew.-% von wenigstens einem Monomer aus der Gruppe bestehend aus Vinylester von verzweigten oder unverzweigten Carbonsäuren mit 2 bis 12 C-Atomen copolymerisiert, vorzugsweise 5 bis 40 Gew.-%, jeweils bezogen auf das Gesamtgewicht der Comonomere. Bevorzugte Vinylester a3) sind Vinylacetat, Vinylpropionat, Vinylbutyrat, Vinyl-2-ethylhexanoat, Vinyllaurat, 1-Methylvinylacetat, Vinylpivalat, Vinylester der Neodecansäure, und Vinylester von alpha-verzweigten Monocarbonsäuren mit 5 bis 12 C-Atomen, beispielsweise VeoVa9^{R} oder VeoVa10^{R} (Handelsnamen der Firma Resolution) oder VERSA10^{R} (Handelsname der Wacker Chemie AG). Besonders bevorzugt sind Vinylacetat, Vinyllaurat, Vinylester der Neodecansäure und die Vinylester von alpha-verzweigten Carbonsäuren mit 9 oder 10 C-Atomen (VeoVa9^{R}, VeoVa10^{R} oder VERSA10^{R}). Am meisten bevorzugt sind Vinylacetat und Vinyllaurat.

Im Allgemeinen werden a4) 0 bis 20 Gew.-% weiterer damit copolymerisierbarer ethylenisch ungesättigter Comonomere copolymerisiert, vorzugsweise 0,1 bis 10 Gew.-%, jeweils bezogen auf das Gesamtgewicht der Comonomere.

Beispiele für weitere damit copolymerisierbare Comonomere a4) (Hilfsmonomere a4) sind ethylenisch ungesättigte Mono- und Dicarbonsäuren, vorzugsweise Acrylsäure, Methacrylsäure und Fumarsäure; ethylenisch ungesättigte Carbonsäureamide und -nitrile, vorzugsweise Acrylamid und Acrylnitril; Diester der Fumarsäure wie die Diethyl- und Diisopropylester, ethylenisch ungesättigte Sulfonsäuren und deren Salze, vorzugsweise Vinylsulfonsäure, 2-Acrylamido-2-methyl-propansulfon-säure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylol-methacrylamids und des N-Methylolallylcarbamats. Geeignet sind auch epoxidfunktionelle Comonomere wie Glycidylmethacrylat (GMA) und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können, insbesonders Vinyltrimethoxysilan und Vinyltriethoxysilan und Methacryloxypropyltrimethoxysilan. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

Bevorzugte Hilfsmonomere a4) sind die ethylenisch ungesättigten Mono- und Dicarbonsäuren wie Acrylsäure, Methacrylsäure und Maleinsäure(anhydrid), die ethylenisch ungesättigten Sulfonsäuren und deren Salze wie Vinylsulfonsäure, die epoxidfunktionellen Comonomere wie Glycidylmethacrylat, die siliciumfunktionellen Comonomere wie Vinyltrimethoxysilan, Vinyltriethoxysilan und Methacryloxypropyltrimethoxysilan, sowie Gemische der genannten Hilfsmonomere. Vorzugsweise werden keine mehrfach ethylenisch ungesättigte Comonomere copolymerisiert.

Besonders bevorzugt sind die epoxidfunktionellen und die siliciumfunktionellen Comonomere, sowie Kombinationen von epoxidfunktionellen und siliciumfunktionellen Comonomeren a4).

Bevorzugt werden Polymerisate von 90 bis 100 Gew.-% von wenigstens einem Monomer a1) und gegebenfalls noch 0,1 bis 10 Gew.-% ein oder mehrere Hilfsmonomere a4). Die Angaben in Gew.-% beziehen sich jeweils auf das Gesamtgewicht der Comonomere und addieren sich jeweils auf 100 Gew.-%. Besonders bevorzugt sind die Polymerisate von n-Butylacrylat oder 2-Ethylhexylacrylat oder deren Gemische, gegebenenfalls mit einem oder mehreren Hilfsmonomeren a4).

Bevorzugt werden auch Mischpolymerisate von 30 bis 70 Gew.-% von wenigstens einem Monomer a1), 30 bis 60 Gew.-% von wenigstens einem Monomer a2) und gegebenfalls noch 0,1 bis 10 Gew.-% ein oder mehrere Hilfsmonomere a4). Besonders bevorzugt sind die Mischpolymerisate von n-Butylacrylat und/oder 2-Ethylhexylacrylat als Monomer a1) mit Methylmethacrylat und/oder Styrol als Monomer a2) und gegebenfalls noch 0,1 bis 10 Gew.-% ein oder mehrere Hilfsmonomere a4).

Bevorzugt werden auch Mischpolymerisate von 30 bis 70 Gew.-% von wenigstens einem Monomer a1), 30 bis 60 Gew.-% von wenigstens einem Monomer a2), 5 bis 40 Gew.-% von wenigstens einem Monomer a3), und gegebenfalls noch 0,1 bis 10 Gew.-% ein oder mehrere Hilfsmonomere a4). Besonders bevorzugt sind die Mischpolymerisate von n-Butylacrylat und/oder 2-Ethylhexylacrylat als Monomer a1) mit Methylmethacrylat und/oder Styrol als Monomer a2) und Vinylacetat und gegebenenfalls weitere von Vinylacetat verschiedene Vinylester als Monomer a3), und gegebenfalls noch 0,1 bis 10 Gew.-% ein oder mehrere Hilfsmonomere a4) .

Die Herstellung der wässrigen Dispersionen des Polymerisats erfolgt nach dem Emulsionspolymerisationsverfahren, wobei die Polymerisationstemperatur im Allgemeinen 40°C bis 120°C, vorzugsweise 60°C bis 90°C beträgt und wobei bei einem Druck von im Allgemeinen 5 bis 100 bar abs. gearbeitet wird. Die Initiierung der Polymerisation erfolgt vorzugsweise mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt. Geeignete Reduktionsmittel sind beispielsweise Natriumhydroxymethansulfinat (Brüggolit) und (Iso-)Ascorbinsäure. Die Reduktionsmittelmenge beträgt vorzugsweise 0,01 bis 3 Gew.-%, bezogen auf das Gesamtgewicht der Monomere. Die genannten Oxidationsmittel, insbesondere die Salze der Peroxodischwefelsäure, können auch alleinig als thermische Initiatoren eingesetzt werden.

Die Polymerisation erfolgt in Gegenwart von 2 bis 10 Gew.-%, bezogen auf das Gesamtgewicht der Comonomeren, eines oder mehrerer, teilverseifter und niedermolekularer Polyvinylalkohole mit einem Hydrolysegrad von jeweils 80 bis 95 Mol-% und einer Höppler-Viskosität, in 4 %-iger wässriger Lösung, von jeweils 1 bis 5 mPas (Methode nach Höppler bei 20°C, DIN 53015). Der Hydrolysegrad der teilverseiften und niedermolekularen Polyvinylalkohole beträgt vorzugsweise 85 bis 90 Mol-%, besonders bevorzugt 87 bis 89 Mol-%. Die Höppler-Viskosität in 4 %-iger wässriger Lösung, der teilverseiften und niedermolekularen Polyvinylalkohole, beträgt vorzugsweise 2 bis 4 mPas (Methode nach Höppler bei 20°C, DIN 53015). Gegebenenfalls können auch teilverseifte und höhermolekulare Polyvinylalkohole mit einem Hydrolysegrad von vorzugsweise 80 bis 95 Mol-% und einer Höppler-Viskosität in 4 %-iger wässriger Lösung von 6 bis 40 mPas (Methode nach Höppler bei 20°C, DIN 53015) alleine oder im Gemisch mit den teilverseiften und niedermolekularen Polyvinylalkoholen eingesetzt werden. Die genannten Polyvinylalkohole sind im Handel erhältlich und mittels dem Fachmann bekannter Verfahren zugänglich.

Gegebenenfalls können zusätzlich noch geringe Mengen an Emulgatoren, beispielsweise anionische und/oder nichtionische Emulgatoren, bei der Polymerisation verwendet werden, beispielsweise 0,1 bis 2,0 Gew.-%, bezogen auf das Gesamtgewicht der Comonomeren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen. Beispiele für nichtionische Emulgatoren sind C₁₂-C₁₄-Fettalkoholethoxylate mit einem Ethoxylierungsgrad von 3 bis 20 Ethylenoxid-Einheiten. Vorzugsweise werden während der Polymerisation keine Emulgatoren verwendet, und auch keine Emulgatoren nachträglich zugegeben.

Das in Wasser redispergierbare Polymerpulver (Dispersionspulver) a) wird mittels Trocknung der entsprechenden wässrigen Dispersionen des Polymerisats hergestellt. Die Trocknung erfolgt mittels Sprühtrocknung in Gegenwart des Gemisches aus mindestens einem Polyvinylalkohol mit einem Hydrolysegrad von 80 bis 95 Mol-% und einer Viskosität nach Höppler von 1 bis 5 mPas, und mindestens einem Polyvinylalkohol mit einem Hydrolysegrad von 80 bis 95 Mol-% und einer Viskosität nach Höppler von 6 bis 40 mPas. Die Polyvinylalkohole werden dabei in einer solchen Menge eingesetzt, dass deren Gewichtsanteil im Dispersionspulver 2 bis 30 Gew.-%, bezogen auf das Gewicht des Polymerisats beträgt. Das Mengenverhältnis des Anteils an niederviskosem Polyvinylalkohol zu höher viskosem Polyvinylalkohol beträgt von 1 : 50 bis 50 : 1, vorzugsweise von 1 : 10 bis 10 : 1.

Die Sprühtrocknung erfolgt mittels Zerstäubung im Sprühtrockner. Als Trocknungsgas wird im Allgemeinen Luft eingesetzt. Zur Beschleunigung der Trocknung wird das Trocknungsgas vorerwärmt, vorzugsweise auf eine Eintrittstemperatur von 130°C bis 210°C (Heißluft). Im Allgemeinen wird noch Antiblockmittel zugegeben. Geeignete Antiblockmittel (Antibackmittel) sind dem Fachmann bekannt, beispielsweise Aluminiumsilikate wie Kaolin, pyrogene Kieselsäure oder gefällte Kieselsäure oder Carbonate wie Calciumcarbonat oder Magnesiumcarbonat. Die Antiblockmittel werden im Allgemeinen in einer Menge von 0,1 bis 30 Gew.-%, vorzugsweise 2 bis 30 Gew.-%, besonders bevorzugt 7 bis 30 Gew.-%, jeweils bezogen auf das Gesamtgewicht der polymeren Bestandteile (Polymerisat und Polyvinylalkohole) der zu zerstäubenden Polymerisatdispersion eingesetzt. Gegebenenfalls kann das Antiblockmittel auch ganz oder teilweise dem fertig getrockneten Polymerpulver vor oder nach dessen Abscheidung vom Trocknungsgas zugegeben werden.

Die Pulverfarben-Zusammensetzung enthält im Allgemeinen 5 bis 30 Gew.-%, vorzugweise 20 bis 30 Gew.-% von einem oder mehreren in Wasser redispergierbaren Polymerpulvern a), jeweils bezogen auf das Gesamtgewicht der Pulverfarben-Zusammensetzung.

Zur Optimierung der Viskosität und zur Optimierung der Deckkraft der mit den Pulverfarben erhältlichen Dispersionsfarben werden bevorzugt in Wasser redispergierbare Polymerpulver a) mit einem Polyvinylalkohol-Anteil von 10 bis 30 Gew.-%, vorzugsweise 20 bis 30 Gew.-%, jeweils bezogen auf das Gewicht des Mischpolymerisats, in der Pulverfarben-Rezeptur verwendet. Diese in Wasser redispergierbaren Polymerpulver a) mit erhöhtem Polyvinylalkohol-Anteil können alleine oder im Gemisch mit einem in Wasser redispergierbaren Polymerpulver a) mit geringerem Polyvinylalkohol-Anteil in der Pulverfarben-Rezeptur verwendet werden.

Die Pulverfarben-Zusammensetzung kann auch ein oder mehrere mineralische Bindemittel enthalten, beispielsweise Zement (Portland-, Aluminat-, Hütten-, Magnesia-, Phosphatzement), Gips, Kalk und Wasserglas. Der Anteil an mineralischem Bindemittel beträgt vorzugsweise 0,1 bis 10 Gew.-%, bezogen auf das Gesamtgewicht der Pulverfarben-Zusammensetzung. Durch Zugabe von Zement oder Kalk zu der trockenen Formulierung kann auch gezielt und nach Bedarf der pH-Wert einer Pulverfarbe eingestellt werden.

Eine Pulverfarbe enthält zusätzlich zu dem polymeren Bindemittel a) und gegebenenfalls mineralischem Bindemittel noch b) Pigmente und Füllstoffe sowie gegebenenfalls noch Zusatzstoffe c) wie Netz- und Dispergiermittel, Verdicker, Entschäumer und pH-Stellmittel.

Geeignete Pigmente und deren Mengenanteile in einer Pulverfarben-Rezeptur sind dem Fachmann bekannt. Beispiele für Pigmente sind anorganische Pigmente wie Titandioxid, Bariumsulfat, Bornitrid und Zinkoxid für weiße Dispersionsfarben. Der Mengenanteil der Pigmente in der Pulverfarben-Zusammensetzung beträgt im Allgemeinen 1 bis 35 Gew.-%, vorzugsweise 5 bis 15 Gew.-%, jeweils bezogen auf das Gesamtgewicht der Pulverfarben-Zusammensetzung.

Um einen bestimmten reproduzierbaren Ton einer Farbe zu erreichen, müssen Pigmente auf einen bestimmten Partikeldurchmesser zerkleinert und homogen in die Farb-Basis eingearbeitet werden. Die Zerkleinerung erfordert den Einsatz von speziellem Equipment, wie zum Beispiel Pigmentmühlen. Die Einarbeitung des Pigments in die Farbe erfolgt dann in einem Dispergier-Schritt. Aufgrund der Komplexität dieses Prozesses, werden vorzugsweise Pigmentpräparationen (auf Wasser- oder Lösemittel-Basis) hergestellt, in denen die Pigmente bereits auf den notwendigen Durchmesser zerkleinert sind, und diese fest-flüssig-Dispersionen mit Tensiden stabilisiert sind. Die Einarbeitung einer solchen Paste ist wesentlich einfacher und bedarf keines hohen Energieaufwandes, und die Durchmischung bis zur vollständigen Homogenisierung ist ausreichend. Die Verwendung einer solchen Pigmentpaste auf wässriger Basis zur Abtönung einer Pulverfarbe nach der Zugabe von Wasser, kurz vor Applikation, ist möglich.

Allerdings enthalten solche Pigmentpasten Biozide, die in die Raumluft emittiert und Allergien hervorrufen können. Aus diesem Grund empfiehlt es sich solche Pigmente auszusuchen, die ohne einen hohen Scheraufwand fürs Einarbeiten, in biozidfreier und trockener Form zum Abtönen genutzt werden können. Solche Pigmente sind als Easy-to-Disperse Pigmentpulver bekannt. Bei Easy-to-Disperse (ED) Pigmentpulvern wird die Partikeloberfläche mit Tensid/Dispergiermittel modifiziert, was die Oberflächenenergie z.B. im wässrigen Medium auf ein Minimum herabsetzt und die Einarbeitung von Pigmenten in die Farbformulierung bei sehr niedrigem Scheraufwand ermöglicht. Bekannt sind bereits auf dem Markt verfügbare ED-Pigmentpulver von Clariant (EDS und EDW Pigmente) und von BASF (X-Fast).

Verzichtet man auf die Abtönung und bleibt bei der weißen Farbe, kann man auf das oberflächenmodifizierte leicht zu dispergierende Titandioxid zurückgreifen (beispielsweise Kronos 2190 oder Tronox 828E) oder auf Titanodioxid-Ersatzprodukte auf Basis von Zinksulfid und dessen Kombinationen mit Bariumsulfat, Kaolinen, hexagonalem Bornitrid.

Geeignete Füllstoffe sind beispielsweise Carbonate wie Calciumcarbonat in Form von Kreide, Dolomit und Calcit. Geeignet sind auch Silikate wie Quarzmehl, Feldspat, Kaolin und Talkum. Geeignet sind auch Faserfüllstoffe wie Cellulosefasern. In der Praxis werden häufig Gemische von Füllstoffen eingesetzt. Der Mengenanteil der Füllstoffe in der Pulverfarben-Zusammensetzung beträgt im Allgemeinen 20 bis 95 Gew.-%, vorzugsweise 30 bis 60 Gew.-%, jeweils bezogen auf das Gesamtgewicht der Pulverfarben-Zusammensetzung.

Die Formulierung einer Pulverfarbe unterscheidet sich prinzipiell von der Formulierung einer flüssigen Farbe aufgrund der Unterschiede in dem Herstellungsprozess. Eine flüssige Farbe wird in einem Mischreaktor mittels einem Dispergier-Prozess hergestellt. Füllstoffe und Pigmente werden dabei hohen Scherkräften ausgesetzt, die die Zerstörung von Partikel-Agglomeraten fördern, die Homogenität der flüssigen Farbe und die Oberflächenqualität der getrockneten Farbschicht verbessern. Dieser Dispergierschritt nimmt je nach Konstruktion und angestrebter Qualität der Farbe mehrere Minuten bis Stunden in Anspruch.

Eine Pulverfarbe dagegen wird aus trockenen Komponenten vollständig formuliert, und lediglich Wasser wird im letzten Schritt zugegeben. Erfolgt die Zugabe des Wassers außerhalb der Farbproduktionsstätte, so ist die Möglichkeit der Dispergierung mit einer hochscherenden Apparatur nicht gegeben. Für die Herstellung einer Farbe unmittelbar vor dem Applizieren stehen dem Verarbeiter im Allgemeinen ein Handrührgerät mit einer Mischrührwelle und wenige Minuten Zeit zur Verfügung. Der damit erreichbare Scheraufwand ist nicht ausreichend, um Partikel-Agglomerate zu zerstören und den gewünschten Homogenisierungsgrad zu erreichen. Deswegen sollten die Füllstoff- und/oder Pigment-Komponenten so gewählt werden, dass diese sich bei geringem Scheraufwand gut mit Wasser verrühren lassen und möglichst keine Agglomerate enthalten. Bei Füllstoffen und Pigmenten sollte auf die Oberflächenbeschaffenheit geachtet werden. Raue Oberfläche mit Kavitäten unterstützt Agglomeration von Partikeln. Versucht man die Desagglomeration mit Zugabe von einer amphiphilen Substanz (Dispergiermittel) zu beschleunigen, wird viel mehr Substanz benötigt. Hier rechnet man Substanzbedarf pro Fläche, die mit einer Monolayer aus amphiphilen Molekülen belegt wird. Je höher die Rauigkeit, desto grö-ßer die Oberfläche und desto höher Bedarf an Dispergiermittel. Für Pulverfarben sollte man aus diesen Überlegungen Füllstoffe aussuchen, die bereits mit einer amphiphilen Substanz Oberflächenbehandelt sind. Diese lassen sich wesentlich leichter mit einem geringen Scheraufwand redispergieren und benötigen weniger Dispergiermittel-Zugabe.

Bei flüssigen Farben werden Füllstoffe unterschiedlicher Korngröße kombiniert, um möglichst dichteste Packung zu erreichen und die Deckfähigkeit zu verbessern. Denselben Ansatz kann man auch bei der Formulierung einer Pulverfarbe verfolgen, jedoch sollten Füllstoffe und Pigmente möglichst kleiner Korngrößen von vorzugsweise 0,1 bis 2 µm gewählt werden. Wenn man auf kleine Korngrößen zurückgreift, kann eine ähnliche Deckfähigkeit auch ohne bimodaler Korngrößenverteilung erreicht werden. Besonders bevorzugt werden Füllstoffe mit einer Korngröße von 0,20 bis 0,35 um. Kleinere Korngrößen bedürfen wiederum keiner intensiven Redispergierung, um eine gute homogene Oberflächenqualität zu erzielen.

Weitere Zusatzstoffe c) sind Netz- und Dispergiermittel, Verdickungsmitteln, Entschäumer, Hydrophobierungsmittel, Filmbildehilfsmittel und pH-Stellmittel. Solche Zusatzstoffe sind im Handel erhältlich und deren Einsatzmengen sind dem Fachmann bekannt.

Beispiele für Dispergiermittel und Netzmittel sind Natrium- und Kalium-Polyphosphate sowie Polyacrylsäuren und deren Salze. Diese werden im Allgemeinen in Anteilen von 0,1 bis 1 Gew.-%, bezogen auf das Gesamtgewicht der Pulverfarben-Zusammensetzung eingesetzt.

Dispergiermittel und Netzmittel erleichtern den Dispergierprozess von Pigmenten und Füllstoffen. Auf der molekularen Ebene besitzen Netz- und Dispergiermittel einen amphiphilen Charakter, das heißt dass ein Teil des Moleküls hydrophil und ein anderes lypophil ist, beziehungsweise sich unterschiedliche Teile des Moleküls in Medien mit unterschiedlichen Polaritäten lösen oder attraktive Wechselwirkungen mit denen eingehen. Amphiphile Moleküle erreichen einen thermodynamisch günstigeren Zustand in den Grenzflächen zwischen Medien unterschiedlicher Polarität. Ein Beispiel für solche Grenzflächen ist die Oberfläche eines Pigmentes oder Füllstoffes, welche sich in wässrigem Medium befindet. Amphiphile Moleküle werden an der Oberfläche eines Pigments adsorbiert, sofern sie entsprechende Gruppen aufweisen, die attraktive Wechselwirkungen mit dem Pigment eingehen. Das hydrophile Teil des Moleküls wird eine günstige Konformation in Richtung des umgebenden Wassers einnehmen. Die Oberflächenenergie des Pigmentteilchens wird herabgesetzt und die Benetzung durch Wasser begünstigt. Aufgrund der abstoßenden Wechselwirkungen der hydrophilen Molekülteile untereinander werden die Pigmentpartikel in einem gewissen Abstand voneinander gehalten. Somit unterstützen amphiphile Moleküle die Benetzung, Dispergierung und Stabilisierung von Pigment- und Füllstoffpartikeln im Wasser.

Die Netz- und Dispergiermittel werden je nach Beschaffenheit der hydrophilen Gruppen in ionische (kationische und anionische), nichtionische und amphotere Verbindungen unterteilt. In der Regel werden für die Formulierung von Farben makromolekulare, ionische Verbindungen als Dispergiermittel verwendet. Solche Moleküle sind jedoch aufgrund der Größe diffusionsträge und zeigen eine relativ langsame Benetzungs-Kinetik. Außerdem reagieren ionische Verbindungen relativ empfindlich auf Anwesenheit von Salzen im Wasser, ändern ihr thermodynamisches Phasenverhalten und können durch ionische Abschirmung Stabilisierungsfähigkeit verlieren. Ionische Amphiphile lösen sich bei niedrigen Temperaturen schlecht im Wasser, während nichtionische genau das umgekehrte Phasenverhalten zeigen und sich im Wasser lösen. Das Phasenverhalten nichtionischer Amphiphile ändert sich nur langsam durch Salz-Zugabe und kann somit in Medien mit hoher Ionen-Konzentrationen gut Dispersions-stabilisierend wirken.

Aus diesen Überlegungen wird empfohlen für die Formulierung von Pulverfarben eine Kombination aus ionischen und nichtionischen Netz- und Dispergiermittel zu verwenden. Eine solche Mischung zeigt hervorragende Stabilisierungs-Eigenschaften, und durch synergistische Effekte kann die Oberflächenspannung und somit die Oberflächenenergie auf ein Minimum herabgesetzt werden. Berücksichtigt man die Benetzungskinetik, sollte ein Teil des Amphiphiles mit einer relativ niedrigen Molmasse gewählt werden, um die Benetzung bei Wasserzugabe zu Pulverfarbe aufgrund der schnelleren Verteilungskinetik in der Bulk-Phase und Adsorptions-Kinetik auf Oberflächen von Pigmenten zu beschleunigen. Das Verhältnis zwischen ionischen und nichtionischen Amphiphil-Anteilen kann experimentell ermittelt werden, indem man die Qualität der Farbe nach bestimmten konstanten Misch-Zeit und Energieeintrag beim Rühren misst.

Beispiele für Verdickungsmittel und Schutzkolloide sind Celluloseether wie Carboxymethylcellulose, Hydroxyethylcellulose, Stärke und Polyvinylalkohol. Bentonit ist ein Beispiel für ein anorganisches Verdickungsmittel. Die Verdickungsmittel und Schutzkolloide werden im Allgemeinen in einer Menge von jeweils 0,01 bis 2 Gew.-%, bezogen auf das Gesamtgewicht der Pulverfarben-Zusammensetzung eingesetzt.

Bei Verdickungsmittel, Schutzkolloiden und auch bei Entschäumern und pH-Stellmittel ist die Auswahl für die Pulverfarbe ähnlich der für die flüssige Farbe, allerdings sollten die Substanzen in Pulverform verfügbar sein. Die Rheologie der Pulverfarbe unterscheidet sich von der der flüssigen Farbe, insbesondere im high shear Bereich, indem sie in diesem Bereich höher ausfällt. Die Auswahl eines Verdickers sollte daher nach Messung des rheologischen Verhaltens gemacht werden.

Beispiele für Hydrophobierungsmittel sind Silane und Fettsäureester. Beispiele für Entschäumer sind Silikonöle, Polyglykole.

Beispiele für Filmbildehilfsmittel sind Esteralkohol-Gemische wie Texanol^{R}.

Beispiele für Stellmittel sind Silikonate wie Kaliummethylsilikonate, Amine, Polyamine, und Polyethylenimine.

Es sind sowohl Formulierungen mit als auch ohne pH-Stellmittel, Hydrophobierungsmittel und Filmbildehilfsmittel möglich.

Zur Herstellung der Pulverfarben-Zusammensetzung können die einzelnen Bestandteile in Form deren feinteiligen Pulver in einem Pulvermischer miteinander vermischt werden. Alternativ dazu kann auch so vorgegangen werden, dass die Bestandteile b) und c) und gegebenenfalls weitere Zusatzstoffe der Pulverfarben-Zusammensetzung zusammen mit der wässrigen Dispersion des Mischpolymerisats zur Herstellung des in Wasser redispergierbaren Polymerpulvers a) vermischt werden, und diese wässrige Mischung anschließend sprühgetrocknet wird. Dabei wird eine Pulverfarben-Zusammensetzung erhalten, welche sich durch besonders gute Dispergierbarkeit in Wasser auszeichnet. Das zuletzt genannte Verfahren zeichnet sich durch die Reduktion der Staubbildung während der Herstellung der Pulverfarben-Zusammensetzung aus.

Die Pulverfarben-Zusammensetzung eignet sich zur Herstellung von wässrigen Dispersionsfarben. Dazu kann der Wasseranteil vorgelegt werden und die Pulverfarben-Zusammensetzung dem Wasser unter Rühren zugemischt werden, oder in umgekehrter Reihenfolge vorgegangen werden, und gegebenenfalls anschließend homogenisiert werden.

Gegenüber wässrigen Dispersionsfarben zeichnet sich die erfindungsgemäße Pulverfarben-Zusammensetzung durch bessere Lagerstabilität aus. Die Pulverfarben-Zusammensetzung ist froststabil, hitzestabil, es kann kein Skinning auftreten, und der Zusatz von Biozid ist entbehrlich. Die Pulverfarben-Zusammensetzung hat im Vergleich zu wässrigen Dispersionsfarben einen reduzierten Verpackungsbedarf. Es ist keine Abpackung in Plastikeimern erforderlich. Bei der Verarbeitung der Pulverfarben-Zusammensetzung kann exakt die benötigte Menge an Dispersionsfarbe hergestellt werden. Die Verwendung der Pulverfarben-Zusammensetzung ist daher verbrauchsfreundlich und abfallfrei.

Der Vorteil der trockenen Pulverfarbe liegt in der entfallenden Notwendigkeit der Topfkonservierung für die Lagerung. Ist eine flüssige Farbe für den Gebrauch angesetzt und wird nicht direkt verwendet, kann sie nachträglich konserviert werden. Hierzu können alle gängigen Schutzmöglichkeiten von Zugabe von konventionellen Bioziden bis hin zu Einstellung eines hohen pH-Wertes verwendet werden. Die Formulierung für die Anwendung im Außenbereich können gegebenenfalls mit Fungiziden und Algiziden geschützt werden, wobei es sich hier um einen Filmschutz handelt.

Die nachfolgenden Beispiele dienen der weiteren Erläuterung der Erfindung :
Die Vorteile der PVOH-stabilisierten, redispergierbaren Polymerpulver (Dispersionspulver) bei der Herstellung von Dispersionsfarben zeigten sich bei der Testung der Polymerpulver in der in Tabelle 1 beschriebenen Farbrezeptur.

Die Rezeptur wurde mit den (Vergleichs)Dispersionspulvern 1 bis 5 angesetzt und es wurden die Viskositätswerte der flüssigen Farbe aufgenommen. Anschließend wurde die Farbe appliziert und getrocknet, und von den applizierten Mustern wurden die Messwerte für Deckkraft (DK) und Scheuerfestigkeit (SK) bestimmt.

### Pulverfarben-Zusammensetzung und Wasseranteil für die Dispersionsfarbe:

**Tabelle 1:**

| Rezepturbestandteil | Masse [g] |
|---|---|
| | |
| Pulverfarbe: | |
| Dispersionspulver | 145,2 |
| TiO₂-Pigment (Kronos 2190) | 60,6 |
| Netzmittel (METOLAT P 588) | 9, 1 |
| CaCO₃-Füllstoff (Socal P2) | 358 |
| Cellulosefaser (Arbocel BE 600-30 PU) | 45,8 |
| Dispergiermittel (Calgon N) | 3,0 |
| Verdickungsmittel (Tylose MH 2.000 yp2) | 4, 4 |
| Masse Pulverfarbe | 626,1 |
| | |
| Dispersionsfarbe | |
| Wasser | 373, 9 |
| Masse Dispersionsfarbe | 1000,0 |
| | |

### Folgende Dispersionspulver wurden zur Testung eingesetzt:

### Dispersionspulver 1 (DP 1):

In Wasser redispergierbares Styrol-Butylacrylat-Copolymerpulver (50 Gew.-% Styrol und 50 Gew.-% n-Butylacrylat) mit 20 Gew.-%, bezogen auf Copolymer, eines Polyvinylalkohol-Gemisches*.

### Dispersionspulver 2 (DP 2):

In Wasser redispergierbares Methylmethacrylat-Butylacrylat-Copolymerpulver (45 Gew.-% Methylmethacrylat und 55 Gew.-% n-Butylacrylat) mit 19 Gew.-%, bezogen auf Copolymer, eines Polyvinylalkohol-Gemisches*.

### Dispersionspulver 3 (DP 3):

In Wasser redispergierbares n-Butylacrylat-Methylmethacrylat-Vinyllaurat-Copolymerpulver (45 Gew.-% n-Butylacrylat, 40 Gew.-% Methylmethacrylat und 15 Gew.-% Vinyllaurat) mit 10,5 Gew.-%, bezogen auf Copolymer, eines Polyvinylalkohol-Gemisches*.

### Dispersionspulver 4 (DP 4):

In Wasser redispergierbares n-Butylacrylat-Methylmethacrylat-Vinyllaurat-Copolymerpulver (50 Gew.-% n-Butylacrylat, 35 Gew.-% Me-thylmethacrylat und 15 Gew.-% Vinyllaurat) mit 10,5 Gew.-%, bezogen auf Copolymer, eines Polyvinylalkohol-Gemisches*.

### Dispersionspulver 5 (DP 5):

In Wasser redispergierbares n-Butylacrylat-Methylmethacrylat-Vinyllaurat-Glycidylmethacrylat-Vinyltriethoxysilan-Copolymerpulver (44,3 Gew.-% n-Butylacrylat, 39,4 Gew.-% Methylmethacrylat und 14,7 Gew.-% Vinyllaurat und jeweils 0,8 Gew.-% Glycidylmethacrylat und Vinyltriethoxysilan) mit 10,5 Gew.-%, bezogen auf Copolymer, eines Polyvinylalkohol-Gemisches*.

### Vergleichsdispersionspulver 6 (VP 6):

In Wasser redispergierbares Styrol-Butylacrylat-Copolymerpulver (50 Gew.-% Styrol und 50 Gew.-% n-Butylacrylat) mit 17 Gew.-%, bezogen auf Copolymer, eines Polyvinylalkohols mit einem Hydrolysegrad von 88 Mol-% und einer Höpplerviskosität von 4 mPas.

### Vergleichsdispersionspulver 7 (VP 7):

In Wasser redispergierbares Styrol-Acrylat-Copolymerpulver, welches mit einem Naphthalinformaldehydsulfonat-Schutzkolloid stabilisiert ist (Acronal S 735 P der BASF SE).

* Polyvinylalkoholgemisch mit einem Polyvinylalkohol mit einem Hydrolysegrad von 88 Mol-% und einer Höpplerviskosität von 4 mPas und einem Polyvinylalkohol mit einem Hydrolysegrad von 88 Mol-% und einer Höpplerviskosität von 13 mPas im Gewichtsverhältnis von 2 : 1.

### Testmethoden:

### Messung der Brookfield-Viskositäten BF1, BF10 und BF100 der Dispersionsfarben:

Die Messung der Brookfield-Viskosität der mit den Pulverfarben-Zusammensetzungen hergestellten Dispersionsfarben erfolgte jeweils mit einem Brookfieldviskosimeter BF 35, nach Temperierung auf 23°C, jeweils unter Verwendung der in der Bedienungsanleitung angegebenen Spindel, bei 1 Umdrehung pro Minute (BF1), bei 10 Umdrehungen pro Minute (BF10) und bei 100 Umdrehungen pro Minute (BF100).

Die Messungen erfolgten unmittelbar nach dem Abmischen der Dispersionsfarben. Die Viskosität wird jeweils in mPas angegeben.

### Bestimmung der Deckkraft DK der Dispersionsfarben:

Die Deckkraft wurde mit der in der "Richtlinie zur Bestimmung des Deckvermögens" des Verbandes der deutschen Lackindustrie, Ausgabe Juli 2002, beschriebenen Methode gemäß DIN EN 13300 ermittelt.

Die Dispersionsfarben wurden mit einem automatischen Filmapplikator, mit einer Rakel mit einer Spalthöhe von 150 µm und 225 um, jeweils auf schwarz-weißen Kontrastkarten (Typ 3H der Firma Lenetta) mit Normfarbwert Y über Schwarz von 7 oder weniger und Normfarbwert Y über Weiß von 80 bis 90, aufgebracht.

Die so beschichteten Kontrastkarten wurden 24 Stunden bei 23°C und 50 % relativer Luftfeuchtigkeit getrocknet und anschließend gewogen. Aus der Auftragsmenge in g/m2 und der Farbdichte wurde jeweils die Ergiebigkeit in m2/l berechnet.

Mit einem Colorimeter (Elrepho 450X von Datacolor) wurden die Normfarbwerte Y (Farbstandards) über der schwarzen und der weißen Basis gemessen und das "Kontrastverhältnis" in "%" berechnet.

Die so ermittelten Werte für das Kontrastverhältnis wurden in einem Diagramm gegen die entsprechende Ergiebigkeit (m²/l) aufgetragen. Durch Interpolation wurde die Deckkraft DK bei 7m²/l bei einem Kontrastverhältnis von 98 % bestimmt.

### Testung der Scheuerfestigkeit SF (Nassabriebsfestigkeit) der Dispersionsfarben:

Zur Bestimmung der Nassabriebsfestigkeit wurden die aus den Pulverfarben hergestellten Dispersionsfarben jeweils mit der Vliesmethode gemäß ISO 11998 getestet.

Die Dispersionsfarbe wurde jeweils mit einem Applikator in einer Schichtdicke von 300 µm (naß) auf eine Leneta-Folie (PVC-Folie) aufgetragen.

Anschließend wurde 72 Stunden bei Normklima (DIN 50014, 23°C und 50 % relative Luftfeuchtigkeit) gelagert, dann 24 Stunden bei 50°C und schließlich 24 Stunden bei Normklima gelagert.

Es resultierte eine Trockenschichtstärke von ca. 200 um.

Dann wurde jeweils drei Teststreifen mit den Abmessungen 2,5 cm x 7,5 cm ausgeschnitten und anschließend gewogen.

Damit wurde die Scheuerprüfung mit 200 Zyklen durchgeführt und anschließend wieder gewogen. Aus der Farbdichte der gescheuerten Fläche und dem Massenverlust des Farbfilms wurde dann der Farbabtrag in um errechnet.

Es wurde jeweils ein Mittelwert aus drei Messungen ermittelt.

Die Ergebnisse der Messungen sind in Tabelle 2 zusammengefasst:

**Tabelle 2:**

| Pulver | BF1 mPas | BF10 mPas | BF100 mPas | DK | SF um |
|---|---|---|---|---|---|
| DP 1 | 119200 | 22400 | 7050 | 97,4 | 35 |
| DP 2 | 62000 | 17320 | 5890 | 96,6 | 39 |
| DP 3 | 60800 | 18000 | 6350 | 96, 0 | 30,3 |
| DP 4 | 65200 | 18320 | 6060 | 95,8 | 34,5 |
| DP 5 | 88800 | 23160 | 7170 | 96, 1 | 21,3 |
| VP 6 | 49000 | 15400 | 6300 | 97,3 | 102 |
| VP 7 | 109400 | 17280 | 3760 | 96, 2 | 99,6 |

Betrachtet man die Werte für die Viskosität, so sieht man insbesondere beim Übergang zu höheren Scherraten, dass die mit den Pulverfarben hergestellten wässrigen Dispersionsfarben relativ hohe Viskositätswerte liefern. Bei der Applikation fällt somit die Scherverdünnung geringer aus und es können mit einem Anstrich höhere Schichtdicken appliziert werden, was Vorteile bei Deckkraft DK mit sich bringt.

Die Scheuerfestigkeit (Nassabrieb), profitiert von dem Anteil des härteren Polymers Polyvinylalkohol, und es werden unabhängig von der Zusammensetzung des Acrylatpolymers niedrigere Werte für den Abrieb erhalten.

Verzichtet man auf das erfindungsgemäß eingesetzte PolyvinylalkoholGemisch verschlechtert sich die Scheuerfestigkeit dramatisch.

Die Kombination von epoxidfunktionellen und siliciumfunktionellen Comonomeren bringt eine zusätzliche Verbesserung der Scheuerfestigkeit.

Die Werte der Deckfähigkeit zeigen die hervorragende Dispergierfähigkeit des Polyvinylalkohols an, welche in der Pulverfarbenformulierung zum Tragen kommt. Der Polyvinylalkohol wirkt hier auch als Netz- und Dispergiermittel. Der Polyvinylalkohol übernimmt teilweise die Rolle eines Dispergiermittels und bedingt eine Verbesserung der Partikelverteilung beim Einrühren der Pulverfarbe ins Wasser, fördert den Zerfall der Partikel-Agglomerate und bewirkt somit die Erhöhung der Deckfähigkeit einer Pulverfarbe.

## Patentansprüche

1. Pulverfarben-Zusammensetzung enthaltend a) mindestens ein in Wasser redispergierbares Polymerpulver, b) Pigment und Füllstoff, und c) gegebenenfalls weitere Zusatzstoffe, **dadurch gekennzeichnet, dass** das in Wasser redispergierbare Polymerpulver a) ein mit Polyvinylalkohol stabilisiertes Polymerisat ist, auf der Basis von a1) 20 bis 100 Gew.-% von wenigstens einem Monomer aus der Gruppe bestehend aus Acrylsäureester von verzweigten oder unverzweigten Alkoholen mit 1 bis 12 C-Atomen, a2) 0 bis 60 Gew.-% von wenigstens einem Monomer aus der Gruppe bestehend aus Methacrylsäureester von verzweigten oder unverzweigten Alkoholen mit 1 bis 12 C-Atomen und Styrol, a3) 0 bis 40 Gew.-% von wenigstens einem Monomer aus der Gruppe bestehend aus Vinylester von verzweigten oder unverzweigten Carbonsäuren mit 2 bis 12 C-Atomen, a4) 0 bis 20 Gew.-% weiterer damit copolymerisierbarer ethylenisch ungesättigter Comonomere, jeweils bezogen auf das Gesamtgewicht der Comonomere und wobei sich die Angaben in Gew.-% jeweils auf 100 Gew.-% aufaddieren, und als Polyvinylalkohol ein Gemisch aus mindestens einem Polyvinylalkohol mit einem Hydrolysegrad von 80 bis 95 Mol-% und einer Viskosität nach Höppler (4 %-ige wässrige Lösung, Methode nach Höppler bei 20°C, DIN 53015) von 1 bis 5 mPas und mindestens einem Polyvinylalkohol mit einem Hydrolysegrad von 80 bis 95 Mol-% und einer Viskosität nach Höppler von 6 bis 40 mPas enthalten ist.

2. Pulverfarben-Zusammensetzung nach Anspruch 1, **dadurch gekennzeichnet, dass** ein Polymerisat auf der Basis von 90 bis 100 Gew.-% von wenigstens einem Monomer a1) und gegebenfalls noch 0,1 bis 10 Gew.-% ein oder mehrere Hilfsmonomere a4) enthalten ist.

3. Pulverfarben-Zusammensetzung nach Anspruch 1, **dadurch gekennzeichnet, dass** ein Polymerisat auf der Basis von 30 bis 70 Gew.-% von wenigstens einem Monomer a1), 30 bis 60 Gew.-% von wenigstens einem Monomer a2) und gegebenfalls noch 0,1 bis 10 Gew.-% ein oder mehrere Hilfsmonomere a4) enthalten ist.

4. Pulverfarben-Zusammensetzung nach Anspruch 1, **dadurch gekennzeichnet, dass** ein Polymerisat auf der Basis von 30 bis 70 Gew.-% von wenigstens einem Monomer a1), 30 bis 60 Gew.-% von wenigstens einem Monomer a2), 5 bis 40 Gew.-% von wenigstens einem Monomer a3), und gegebenfalls noch 0,1 bis 10 Gew.-% ein oder mehrere Hilfsmonomere a4) enthalten ist.

5. Pulverfarben-Zusammensetzung nach Anspruch 1 bis 4, **dadurch gekennzeichnet, dass** als Hilfsmonomere a4) epoxidfunktionelle oder siliciumfunktionelle Comonomere, sowie Kombinationen von epoxidfunktionellen und siliciumfunktionellen Comonomeren enthalten sind.

6. Pulverfarben-Zusammensetzung nach Anspruch 1 bis 5, **dadurch gekennzeichnet, dass** das in Wasser redispergierbare Polymerpulver a) einen Polyvinylalkohol-Anteil von 2 bis 30 Gew.-%, bezogen auf das Gewicht des Polymerisats, hat.

7. Pulverfarben-Zusammensetzung nach Anspruch 1 bis 6, **dadurch gekennzeichnet, dass** das in Wasser redispergierbare Polymerpulver a) einen erhöhten Polyvinylalkohol-Anteil von 20 bis 30 Gew.-% hat, und alleine oder im Gemisch mit einem in Wasser redispergierbaren Polymerpulver a) mit geringerem Polyvinylalkohol-Anteil in der Pulverfarben-Zusammensetzung verwendet wird.

8. Pulverfarben-Zusammensetzung nach Anspruch 1 bis 7, **dadurch gekennzeichnet, dass** die Pulverfarben-Zusammensetzung ein oder mehrere hydraulische Bindemittel enthält.

9. Verfahren zur Herstellung einer Pulverfarben-Zusammensetzung nach Anspruch 1 bis 8, **dadurch gekennzeichnet, dass** die einzelnen Bestandteile in Form deren feinteiligen Pulver in einem Pulvermischer miteinander vermischt werden.

10. Verfahren zur Herstellung einer Pulverfarben-Zusammensetzung nach Anspruch 1 bis 8, **dadurch gekennzeichnet, dass** die Bestandteile b) und c) der Pulverfarben-Zusammensetzung zusammen mit der wässrigen Dispersion des Polymerisats zur Herstellung des in Wasser redispergierbaren Polymerpulvers a) vermischt werden, und diese wässrige Mischung anschließend sprühgetrocknet wird.

11. Verwendung einer Pulverfarben-Zusammensetzung nach Anspruch 1 bis 8 zur Herstellung von wässrigen Dispersionsfarben.

## Claims

1. Powder paint composition comprising a) at least one polymer powder redispersible in water, b) pigment and filler, and c) optionally further additives, **characterized in that** the polymer powder redispersible in water a) is a polymer stabilized with polyvinyl alcohol, based on a1) 20 to 100% by weight of at least one monomer from the group consisting of acrylic esters of branched or unbranched alcohols having 1 to 12 carbon atoms, a2) 0 to 60% by weight of at least one monomer from the group consisting of methacrylic esters of branched or unbranched alcohols having 1 to 12 carbon atoms and styrene, a3) 0 to 40% by weight of at least one monomer from the group consisting of vinyl esters of branched or unbranched carboxylic acids having 2 to 12 carbon atoms, a4) 0 to 20% by weight of other ethylenically unsaturated comonomers copolymerizable therewith, based in each case on the total weight of the comonomers and where the figures in % by weight add up to 100% by weight in each case, and the polyvinyl alcohol present is a mixture of at least one polyvinyl alcohol having a degree of hydrolysis of 80 to 95 mol% and a Höppler viscosity (4% aqueous solution, Höppler method at 20°C, DIN 53015) of 1 to 5 mPas and at least one polyvinyl alcohol having a degree of hydrolysis of 80 to 95 mol% and a Höppler viscosity of 6 to 40 mPas.

2. Powder paint composition according to Claim 1, **characterized in that** a polymer based on 90 to 100% by weight of at least one monomer a1) and optionally also 0.1 to 10% by weight of one or more auxiliary monomers a4) is present.

3. Powder paint composition according to Claim 1, **characterized in that** a polymer based on 30 to 70% by weight of at least one monomer a1), 30 to 60% by weight of at least one monomer a2) and optionally also 0.1 to 10% by weight of one or more auxiliary monomers a4) is present.

4. Powder paint composition according to Claim 1, **characterized in that** a polymer based on 30 to 70% by weight of at least one monomer a1), 30 to 60% by weight of at least one monomer a2), 5 to 40% by weight of at least one monomer a3), and optionally also 0.1 to 10% by weight of one or more auxiliary monomers a4) is present.

5. Powder paint composition according to Claims 1 to 4, **characterized in that** epoxide-functional or silicon-functional comonomers, and combinations of epoxide-functional and silicon-functional comonomers are present as auxiliary monomers a4).

6. Powder paint composition according to Claims 1 to 5, **characterized in that** the polymer powder redispersible in water a) has a polyvinyl alcohol content of 2 to 30% by weight, based on the weight of the polymer.

7. Powder paint composition according to Claims 1 to 6, **characterized in that** the polymer powder redispersible in water a) has an increased polyvinyl alcohol content of 20 to 30% by weight, and is used alone or in a mixture with a polymer powder redispersible in water a) having a lower polyvinyl alcohol content, in the powder paint composition.

8. Powder paint composition according to Claims 1 to 7, **characterized in that** the powder paint composition comprises one or more hydraulic binders.

9. Process for producing a powder paint composition according to Claims 1 to 8, **characterized in that** the individual constituents are mixed with one another in the form of finely divided powders thereof in a powder mixer.

10. Process for producing a powder paint composition according to Claims 1 to 8, **characterized in that** the constituents b) and c) of the powder paint composition are mixed together with the aqueous dispersion of the polymer to produce the polymer powder redispersible in water a), and this aqueous mixture is then spray-dried.

11. Use of a powder paint composition according to Claims 1 to 8 for producing aqueous emulsion paints.

## Revendications

1. Composition de peinture en poudre contenant a) au moins une poudre polymère redispersible dans l'eau, b) un pigment et une charge et c) le cas échéant d'autres additifs, **caractérisée en ce que** la poudre polymère redispersible dans l'eau a) est un polymère stabilisé par du poly(alcool vinylique), à base de a1) 20 à 100% en poids d'au moins un monomère du groupe constitué par les esters de l'acide acrylique d'alcools ramifiés ou non ramifiés comprenant 1 à 12 atomes de C, a2) 0 à 60% en poids d'au moins un monomère du groupe constitué par les esters de l'acide méthacrylique d'alcools ramifiés ou non ramifiés comprenant 1 à 12 atomes de C et le styrène, a3) 0 à 40% en poids d'au moins un monomère du groupe constitué par les esters vinyliques d'acides carboxyliques ramifiés ou non ramifiés comprenant 2 à 12 atomes de C, a4) 0 à 20% en poids d'autres comonomères éthyléniquement insaturés, copolymérisables avec ceux-ci, à chaque fois par rapport au poids total des comonomères et la somme des indications en % en poids valant à chaque fois 100% en poids et la composition contenant, en tant que poly(alcool vinylique), un mélange d'au moins un poly(alcool vinylique) présentant un degré d'hydrolyse de 80 à 95% en mole et une viscosité selon Höppler (solution aqueuse à 4%, procédé selon Höppler à 20°C, DIN 53015) de 1 à 5 mPa.s et d'au moins un poly(alcool vinylique) présentant un degré d'hydrolyse de 80 à 95% en mole et une viscosité selon Höppler de 6 à 40 mPa.s.

2. Composition de peinture en poudre selon la revendication 1, **caractérisée en ce qu'**un polymère à base de 90 à 100% en poids d'au moins un monomère a1) et le cas échéant encore de 0,1 à 10% en poids d'un ou de plusieurs monomères auxiliaires a4) est contenu.

3. Composition de peinture en poudre selon la revendication 1, **caractérisée en ce qu'**un polymère à base de 30 à 70% en poids d'au moins un monomère a1), de 30 à 60% en poids d'au moins un monomère a2) et le cas échéant encore de 0,1 à 10% en poids d'un ou de plusieurs monomères auxiliaires a4) est contenu.

4. Composition de peinture en poudre selon la revendication 1, **caractérisée en ce qu'**un polymère à base de 30 à 70% en poids d'au moins un monomère a1), de 30 à 60% en poids d'au moins un monomère a2), de 5 à 40% en poids d'au moins un monomère a3) et le cas échéant encore de 0,1 à 10% en poids d'un ou de plusieurs monomères auxiliaires a4) est contenu.

5. Composition de peinture en poudre selon la revendication 1 à 4, **caractérisée en ce qu'**elle contient, comme monomères auxiliaires a4), des comonomères à fonctionnalité époxyde ou à fonctionnalité silicium ainsi que des combinaisons de comonomères à fonctionnalité époxyde et à fonctionnalité silicium.

6. Composition de peinture en poudre selon la revendication 1 à 5, **caractérisée en ce que** la poudre polymère redispersible dans l'eau a) présente une proportion de poly(alcool vinylique) de 2 à 30% en poids, par rapport au poids du polymère.

7. Composition de peinture en poudre selon la revendication 1 à 6, **caractérisée en ce que** la poudre polymère redispersible dans l'eau a) présente une proportion de poly(alcool vinylique) accrue de 20 à 30% en poids et est utilisée seule ou en mélange avec une poudre polymère redispersible dans l'eau a) présentant une proportion de poly(alcool vinylique) plus faible dans la composition de peinture en poudre.

8. Composition de peinture en poudre selon la revendication 1 à 7, **caractérisée en ce que** la composition de peinture en poudre contient un ou plusieurs liants hydrauliques.

9. Procédé pour la préparation d'une composition de peinture en poudre selon la revendication 1 à 8, **caractérisé en ce que** les différents constituants sous forme de leur poudre finement divisée sont mélangés les uns avec les autres dans un mélangeur de poudre.

10. Procédé pour la préparation d'une composition de peinture en poudre selon la revendication 1 à 8, **caractérisé en ce que** les constituants b) et c) de la composition de peinture en poudre sont mélangés conjointement avec la dispersion aqueuse du polymère pour la préparation de la poudre polymère redispersible dans l'eau a) et ce mélange aqueux est ensuite séché par pulvérisation.

11. Utilisation d'une composition de peinture en poudre selon la revendication 1 à 8 pour la préparation de peintures aqueuses en dispersion.
